(19) Europäisches Patentamt
European Patent Office
Office européen des brevets

(11) **EP 1 530 039 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(51) Int Cl.:
***G01N 23/04*** *(2006.01)*

(21) Anmeldenummer: **04026683.5**

(22) Anmeldetag: **10.11.2004**

(54) **Verfahren zur Entzerrung eines Röntgenbildes eines Gepäckstücks**

Method for rectifying of an x-ray image of a piece of luggage

Méthode pour la rectification d'une image d'une pièce de bagage

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **10.11.2003 DE 10352411**

(43) Veröffentlichungstag der Anmeldung:
**11.05.2005 Patentblatt 2005/19**

(73) Patentinhaber: **GE Homeland Protection, Inc.**
**Newark, CA 94560 (US)**

(72) Erfinder: **Schmiegel, Armin, Dr.**
**22609 Hamburg (DE)**

(74) Vertreter: **DTS München**
**St.-Anna-Strasse 15**
**80538 München (DE)**

(56) Entgegenhaltungen:
**US-A- 5 319 547      US-A- 5 638 420**
**US-A- 5 870 449      US-B1- 6 252 929**

EP 1 530 039 B1

**Beschreibung**

Die Erfindung betrifft ein Verfahren zur Entzerrung eines Röntgenbildes eines Gepäckstücks bei der Gepäckkontrolle.

Es ist heutzutage möglich, Gepäckstücke vollständig auf Sprengstoffe zu analysieren. Dazu werden Geräte eingesetzt, die häufig in der Form eines Linescanners arbeiten. Der Röntgenstrahl durchleuchtet dabei scheibenweise das zu untersuchende Gepäckstück. Die Durchleuchtungsstrahlung wird mit einem Zeilendetektor aufgenommen. Hierbei werden häufig L-Shape-Detektoren benutzt. Aufgrund ihrer Geometrie erfolgt insbesondere im Bereich des rechten Winkels eine starke Verzerrung des aufgenommenen Gepäckstücks. Ein solches verzerrtes Bild wird auf einem Monitor angezeigt und vom Sicherheitspersonal begutachtet. Durch die Verzerrung kann es vorkommen, dass die in dem Gepäckstück enthaltenen Gegenstände nicht richtig eingeschätzt werden können. Dies führt zu einem Sicherheitsrisiko, da unter Umständen gefährliche Gegenstände nicht erkannt werden.

Aus der US 4,817,121 ist ein Apparat zur Gepäcküberprüfung mittels Röntgenstrahlung benannt. Dieser durchleuchtet das zu überprüfende Objekt, das sich auf einem Förderband befindet, mittels eines fächerförmigen Röntgenstrahls. Mittels eines L-förmigen Detektors wird ein Röntgenbild des Gegenstandes aufgenommen. Die Messdaten werden an einen Bildprozessor weitergeleitet, um dort in ein Bildsignal zur Ausgabe auf einem Bildschirm verarbeitet zu werden. Im Bildprozessor erfolgt eine Verzerrungskorrektur, so dass trotz der Verwendung eines L-förmigen Detektors ein Bild entsteht, wie dies mit einem schräg gestellten planaren Detektor aufgenommen worden wäre. Die Entzerrung erfolgt dadurch, dass die geometrischen Daten der Abbildungsgeometrie des L-förmigen Detektors auf einen planaren Detektor umgerechnet werden. Hierbei werden insbesondere die Prozentanteile berücksichtigt, die bei einer Umlegung auf einen planaren Detektor von jeweils dem realen Detektorelement des L-förmigen Detektors auf ein virtuelles Detektorelement des planaren Detektors entfallen. Dadurch wird zwar die zuvor als nachteilhaft bezeichnete Verzerrung weitgehend vermieden, es sind jedoch immer noch Verbesserungsmöglichkeiten bezüglich der Darstellung wünschenswert.

Aufgabe der Erfindung ist es deswegen, ein Verfahren zur Verfügung zu stellen, das eine noch bessere Erkennbarkeit der in einem Gepäckstück enthaltenen Gegenstände ermöglicht.

Die Aufgabe wird durch ein Verfahren mit den Merkmalen des Patentanspruchs 1 gelöst. Bei dem erfindungsgemäßen Verfahren wird mittels der geometrischen Reskalierung eine deutliche Entzerrung der vorher stark verzerrten Aufnahme des Gepäckstücks erreicht. Für die erfindungsgemäße geometrische Reskalierung werden lediglich die verzerrte Aufnahme des Gepäckstücks und die geometrischen Daten der Abbildungsgeometrie der Röntgendurchleuchtungsvorrichtung, mittels der die verzerrte Aufnahme gewonnen wurde, benötigt. Eine Verfolgung des Strahlengangs erfolgt für jedes Detektorelement jeweils auf eine einzige vorgegebene Ebene. Dadurch wird eine einheitliche Bezugsfläche definiert, auf die die geometrische Reskalierung bezogen wird. Die dann entzerrte, also geometrisch reskalierte Aufnahme des Gepäckstücks wird an ein darstellendes oder bildverarbeitendes Gerät weitergeleitet, so dass das Sicherheitspersonal ein im Wesentlichen entzerrtes Bild der Gegenstände innerhalb des Gepäckstücks sehen kann und somit diese auch besser zuordnen kann.

Eine vorteilhafte Weiterbildung der Erfindung sieht vor, dass als Röntgendurchleuchtungsvorrichtung ein Zeilendetektor, insbesondere ein L-Shape-Detektor, verwendet wird. Ein solcher L-Shape-Detektor weist eine sehr einfache Geometrie auf, so dass die Entzerrung sehr einfach bestimmt werden kann.

Eine weitere vorteilhafte Weiterbildung der Erfindung sieht vor, dass das Röntgenbild vor der geometrischen Reskalierung einer optischen Kalibrierung unterzogen wird. Hierbei wird insbesondere die volle Dynamik der Intensitätswerte der Aufnahme verwendet und eine so genannte Histogramm-Angleichung vorgenommen.

Eine weitere vorteilhafte Weiterbildung der Erfindung sieht vor, dass eine Bestimmung der Höhe des Gepäckstücks, insbesondere mittels einer Lichtschranke, erfolgt. Dadurch ist es möglich, dass die optimale Ebene, auf die die geometrische Reskalierung bezogen wird, festgelegt werden kann. Insbesondere bei hohen Gepäckstücken ist es sinnvoll, die vorgegebene Ebene, auf die die geometrische Reskalierung bezogen wird, auf der halben Höhe des Gepäckstücks parallel zur Auflagefläche vorzunehmen.

Weitere vorteilhafte Weiterbildungen der Erfindung sind Gegenstand der Unteransprüche.

Vorteilhafte Ausgestaltungen der Erfindung werden weiter anhand der Zeichnungen erläutern Im Einzelnen zeigen:

Fig. 1 a-b   zwei schematisch dargestellte Röntgendurchleuchtungsvorrichtungen mit unterschiedlichen Geometrien,

Fig. 2 a-b   Darstellungen jeweils eines Durchleuchtungsbildes zweier unterschiedlicher Gepäckstücke mit der Röntgendurchleuchtungsvorrichtung der Fig. 1 a,

Fig. 3   ein Blockschaltbild einer Vorrichtung, auf der ein erfindungsgemäßes Verfahren abläuft, und

Fig. 4 a-b   Darstellungen der beiden Gepäckstücke aus den Fig. 2 a-b nach Durchführung des erfindungsgemäßen Verfahrens.

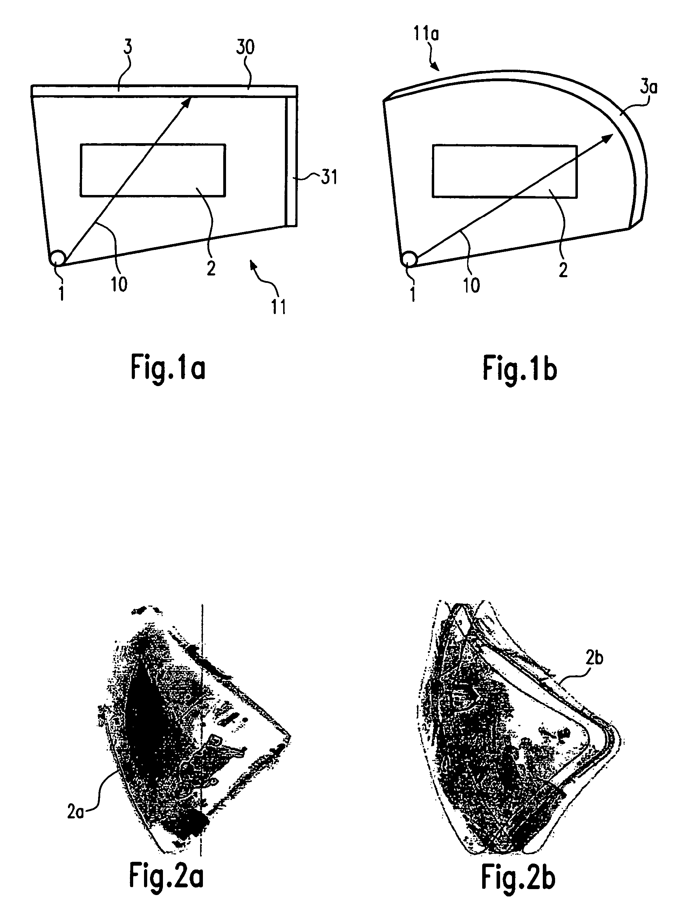

In den Fig. 1a und 1b sind zwei bekannte Röntgendurchleuchtungsvorrichtungen 11, 11a schematisch dargestellt. Diese weisen jeweils eine Röntgenquelle 1 auf, von der ein Strahlengang 10 ein Gepäckstück 2 überstreicht. Die transmittierte Röntgenstrahlung wird von einem Zeilendetektor 3, 3a aufgenommen. Die geometrische Ausgestaltung der Zeilendetektoren 3, 3a ist in unterschiedlichen Formen bekannt. Im Folgenden werden nur noch Ausführungen hinsichtlich einer weitverbreiteten L-förmigen Detektoreinheit gemacht. Ein solcher Detektor wird als L-Shape-Detektor 3 bezeichnet.

In den Fig. 2a und 2b ist jeweils ein Röntgenbild 2a, 2b von unterschiedlichen Gepäckstücken 2 dargestellt, die in einer Röntgendurchleuchtungseinrichtung 11 mit L-Shape-Detektor 3 aufgenommen wurden. Hierbei ist deutlich eine Verzerrung entlang der horizontalen Achse zu erkennen. Diese hat ihren Ursprung in der Winkelauflösung. Ein Strahlenbündel mit einer Winkelbreite deckt unterschiedlich große Bereiche des L-Shape-Detektors 3 ab. Insbesondere an der Stelle, an der der horizontale Detektor 30 in den vertikalen Detektor 31 übergeht, erkennt man eine starke Verzerrung der Aufnahme 2a, 2b des Gepäckstücks 2. Dies ist in den Fig. 2a und 2b im linken Bereich der jeweiligen Aufnahme 2a, 2b der Fall.

Darüber hinaus werden Gegenstände in dem Gepäckstück 2, die eine unterschiedliche Höhe haben, unter Umständen auf das selbe Detektorelement abgebildet. Diese Verzerrung erschwert die Analyse der Aufnahme 2a, 2b des Gepäckstücks 2 enorm. Die Informationsdichte ist nicht gleichmäßig über die Aufnahme 2a, 2b verteilt. In einigen Bereichen insbesondere in den stark gestauchten Bereichen im linken Abschnitt der Figuren 2a, 2b, sind sehr viele Informationen auf einem sehr kleinen Bereich gespeichert. Hinzu tritt noch die optische Verzerrung, die aus den vorbeschriebenen Gründen auftritt, die eine Interpretation solcher Aufnahmen 2a, 2b erheblich erschwert. Es bleibt festzuhalten, dass ein Vergleich zwischen Röntgenbildern 2a, 2b des selben Gepäckstücks 2, die von unterschiedlichen Linescannern durchgeführt wurden, erheblich behindert wird.

Dieses Problem wurde bislang nicht versucht zu beheben, indem eine Entzerrung der Aufnahmen 2a, 2b des Gepäckstücks 2 erfolgt, sondern mittels Doppelenergiebildern. Solche Geräte dienen dazu, einen Verdacht zu ermitteln, der dann mit anderen Analysemethoden überprüft wird. Eine andere Möglichkeit war es bislang, die Lage des Gepäckstücks 2 zu ändern, so dass der stark verzerrte Bereich in einen weniger verzerrten Bereich geschoben wird.

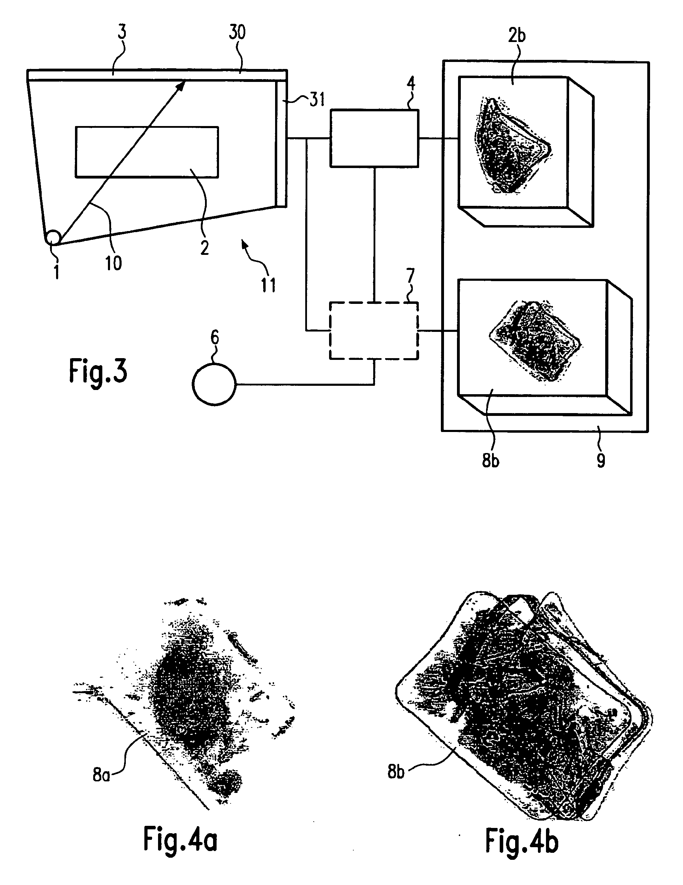

In Fig. 3 wird der schematische Ablauf eines erfindungsgemäßen Verfahrens zur Entzerrung eines Röntgenbildes 2a, 2b eines Gepäckstücks 2 dargestellt. Das erfindungsgemäße Verfahren fußt dabei auf dem oben beschriebenen Verfahren zur verzerrten Aufnahme eines Röntgenbilds 2a, 2b eines Gepäckstücks 2 innerhalb einer Röntgendurchleuchtungsvorrichtung 11 mit einer Röntgenquelle 1 und einem L-Shape-Detektor 3. Die erhaltenen Linescannbilder wurden regelmäßig einer optischen Kalibrierung 4 unterzogen. Bei den Doppelenergiesystemen folgt hierbei eine Farbkodierung, die der Ordnungszahl des gesehenen Objekts innerhalb des Gepäckstücks 2 entspricht. Verdächtige Bereiche wurden markiert und die Daten dieser Vorverarbeitung dann an ein darstellendes oder bildverarbeitendes Gerät 9 übertragen. Beispielsweise wurde hierfür ein Bildverteilungsrechner verwendet, der die Bilddaten einem oder verschiedenen Operatoren sendet.

Die optische Kalibrierung 4 wird immer noch in vorteilhafter Weise verwendet. Zusätzlich wird jedoch eine Übermittlung 5 der geometrischen Daten der Abbildungsgeometrie der Röntgendurchleuchtungsvorrichtung 11 vorgenommen. Darüber hinaus wird bevorzugt die Bestimmung 6 der Lage der Projektionsebene anhand einer Höhenbestimmung des Gepäckstücks 2 vorgenommen und diese Daten ebenfalls übermittelt. Die Bestimmung der Höhe des Gepäckstücks 2 kann hierbei bevorzugt mittels einer Lichtschranke erfolgen. Das aufgrund der optischen Kalibrierung 4 erhaltene verzerrte Röntgenbild 2b des Gepäckstücks 2 wird der geometrischen Reskalierung 7 unterzogen. Dabei wird davon ausgegangen, dass es sich bei dem Röntgenbild 2b um die Projektion eines flächigen Objektes handelt. Während sich der tatsächliche Intensitätswert eines Detektorelements aus

$$I = \int_0^1 ds \, f(s)$$

ergibt, wobei $f(s)$ die Absorptionseigenschaften des durchstrahlten Mediums entlang des Strahls darstellt, wird hier die Annahme gemacht, dass sich der Intensitätswert aus

$$I = \int_0^1 ds \, \delta(s - s_0) f'(s)$$

ergibt. Dabei liegt der Punkt $s_0$ auf einer bestimmten Ebene. Diese Ebene kann gegebenenfalls modifiziert werden. Für jedes Detektorelement wird der Strahlengang 10 auf die $s_0$-Ebene verfolgt. Die gewählte $s_0$-Ebene liegt hierbei auf der halben Höhe des Gepäckstücks 2, welches vorher beispielsweise mittels einer Lichtschranke ermittelt wurde. Es versteht ich von selbst, dass auch jede andere $s_0$-Ebene verwendet werden kann. Der Vorteil der Verwendung der $s_0$-Ebene auf der halben Höhe des Gepäckstücks 2 liegt darin, dass die Maximalverzerrung am geringsten ist, da der Abstand jeden Objekts innerhalb des Gepäckstücks 2 zur $s_0$-Ebene höchstens die Hälfte der Höhe des Gepäckstücks beträgt.

Das durch die geometrische Reskalierung 7 ermittelte entzerrte Röntgenbild 8b wird an das darstellende oder bildverarbeitende Gerät 9 weitergegeben und angezeigt. Dem Sicherheitspersonal ist es somit möglich, ein überwiegend entzerrtes Röntgenbild 8b des Gepäckstücks 2 zu erhalten und die darin enthaltenen Gegenstände besser erkennen zu können.

In den Fig. 4a und 4b sind die entzerrten Röntgenbilder 8a, 8b der beiden in den Fig. 2a und 2b dargestellten Gepäckstücke 2a, 2b gezeigt. Die entzerrten Röntgenbilder 8a, 8b sehen übersichtlicher aus und die in dem Gepäckstück 2 enthaltenen Objekte lassen sich einfacher erkennen. Die Problematik der Verzerrung, je nach Abstand eines Gegenstandes innerhalb des Gepäckstücks 2a, 2b von der $s_0$-Ebene ist besonders gut in Fig. 4b zu erkennen. Die Projektionsebene wurde hier nicht auf die halbe Höhe des Gepäckstücks 2 festgelegt, sondern auf die Fließbandhöhe. Daher sind Objekte, die sich in der Nähe des Fließbandes befinden, nur gering verzerrt. Objekte, die höher liegen, insbesondere in der Nähe der Oberseite des Gepäckstücks 2, werden dabei stärker verzerrt. Durch die Änderung der Projektionsebene kann dies jedoch korrigiert werden.

Die in den Figuren 2a und 2b stark gestauchten Bereichen in den linken Bildhälften sind in den Fig. 4a und 4b erheblich entzerrt. Dadurch wird die Analyse von Objekten, die sich in diesen Bereichen befinden, deutlich vereinfacht.

Das erfindungsgemäße Verfahren ist aufgrund seines geringen Rechenaufwandes auch echtzeitfähig. Es benötigt nämlich lediglich die Bilddaten und die Detektorgeometrien. Somit kann jedes existierende Linescan-System mit einem solchen erfindungsgemäßen Verfahren problemlos ausgerüstet werden.

BEZUGSZEICHENLISTE

| | |
|---|---|
| 1 | Röntgenquelle |
| 2 | Gepäckstück |
| 2a, 2b | Röntgenbild des Gepäckstücks |
| 3, 3a | Zeilendetektor |
| 4 | Optische Kalibrierung |
| 5 | Übermittlung der geometrischen Daten der Abbildungssgeometrie |
| 6 | Bestimmung der Lage der Projektionsebene |
| 7 | Geometrische Reskalierung |
| 8a, 8b | Entzerrtes Röntgenbild des Gepäckstücks |
| 9 | Darstellendes oder bildverarbeitendes Gerät |
| 10 | Strahlengang |
| 11, 11a | Röntgendurchleuchtungsvorrichtung |
| 30 | Horizontaler Detektor |
| 31 | Vertikaler Detektor |

**Patentansprüche**

1. Verfahren zur Entzerrung eines Röntgenbildes (2a, 2b) eines Gepäckstücks (2) bei der Gepäckkontrolle mit folgenden Schritten:

- Aufnahme des Röntgenbildes (2a, 2b) des Gepäckstücks (2) mittels einer Röntgendurchleuchtungsvorrichtung (11, 11a);
- geometrische Reskalierung (7) des Röntgenbildes (2a, 2b) unter Berücksichtigung lediglich der geometrischen Daten der Abbildungsgeometrie der Röntgendurchleuchtungsvorrichtung (11, 11a) sowie der Bilddaten der Aufnahme des Röntgenbildes (2a, 2b) des Gepäckstücks (2), wobei eine Verfolgung des Strahlengangs (10) für jedes Detektorelement jeweils auf eine einzige vorgegebene Ebene erfolgt;
- Übergabe des reskalierten, entzerrten Röntgenbildes (8a, 8b) an ein darstellendes oder bildverarbeitendes Gerät (9).

2. Verfahren nach Anspruch 1, **dadurch gekennzeichnet, dass** eine Bestimmung der Höhe des Gepäckstücks (2), insbesondere mittels einer Lichtschranke, erfolgt.

3. Verfahren nach Anspruch 2, **dadurch gekennzeichnet, dass** die vorgegebene Ebene auf der halben Höhe des Gepäckstücks (2) parallel zur Auflagefläche verläuft.

4. Verfahren nach einem der vorstehenden Ansprüche, **dadurch gekennzeichnet, dass** die Röntgendurchleuchtungsvorrichtung (11, 11a) einen Zeilendetektor (3, 3a), insbesondere einen L-Shape-Detektor, aufweist.

5. Verfahren nach einem der vorstehenden Ansprüche, **dadurch gekennzeichnet, dass** das Röntgenbild (2a, 2b) vor der geometrischen Reskalierung (7) einer optischen Kalibrierung (4) unterzogen wird.

**Claims**

1. Procedure for the rectification of an X-ray image (2a, 2b) of a piece of luggage (2) during the luggage inspection with the following steps:

- Photograph of the X-ray image (2a, 2b) of the piece of luggage (20 by means of an X-ray examination device (11, 11a);
- geometrical rescaling (7) of the X-ray image (2a, 2b) taking into account merely the geometrical data of the imaging geometry of the X-ray examination device (11, 11a) as well as the image data of the photograph of the X-ray image (2a, 2b) of the piece of luggage (2), in which a tracking of the path of rays (10) for every detector element occurs respectively on a single specified plane;
- transfer of the rescaled, rectified X-ray image (8a, 8b) to a descriptive or image processing device (9).

2. Procedure according to Claim 1, **characterized in that** a determination of the height of the piece of luggage (2) occurs, particularly by means of a light barrier.

3. Procedure according to Claim 2, **characterized in that** the specified plane runs parallel to the contact surface at half the height of the piece of luggage (2).

4. Procedure according to one of the preceding claims, **characterized in that** the X-ray examination device (11, 11a) has a line detector (3, 3a), in particular an L-shape detector.

5. Procedure according to one of the preceding claims, **characterized in that** the X-ray image (2a, 2b) is subjected before the geometrical rescaling (7) to an optical calibration (4).

**Revendications**

1. Procédé d'égalisation d'une radiographie (2a, 2b) d'un colis (2) lors du contrôle des bagages qui comprend les étapes consistant à :

   - représenter la radiographie (2a, 2b) du colis (2) au moyen d'un dispositif de radiographie (11, 11a) ;
   - redimensionner géométriquement (7) la radiographie (2a, 2b) en ne prenant en compte que les données géométriques de la géométrie affine du dispositif de radiographie (11, 11a) et les données d'images de l'image de la radiographie (2a, 2b) du colis (2), un suivi du chemin optique (10) étant réalisé pour chaque élément de détecteur sur un plan individuel donné ;
   - transmettre la radiographie redimensionnée et égalisée (8a, 8b) vers un appareil d'affichage ou de traitement d'images (9).

2. Procédé selon la revendication 1, **caractérisé en ce qu'**une détermination de la hauteur du colis (2) a lieu, notamment au moyen d'un barrage photo-électrique.

3. Procédé selon la revendication 2, **caractérisé en ce que** le plan donné est situé au niveau de la moitié de la hauteur du colis (2), parallèle à la surface d'appui.

4. Procédé selon l'une quelconque des revendications précédentes, **caractérisé en ce que** le dispositif de radiographie (11, 11a) comporte un détecteur de lignes (3, 3a), notamment un détecteur en forme de L.

5. Procédé selon l'une quelconque des revendications précédentes, **caractérisé en ce que** la radiographie (2a, 2b) est soumise à un calibrage optique (4) avant le redimensionnement géométrique (7).

Fig.1a

Fig.1b

Fig.2a

Fig.2b

Fig.3

Fig.4a

Fig.4b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4817121 A